# EUROPÄISCHE PATENTSCHRIFT

(11) **EP 1 025 419 B1**
(45) Veröffentlichungstag und Bekanntmachung des Hinweises auf die Patenterteilung: **14.08.2002**
(21) Anmeldenummer: 98955449.8
(22) Anmeldetag: 14.10.1998
(51) Int. Cl.: G01B 17/02, G01S 7/52

(54) **MESSVERFAHREN FÜR DIE WANDDICKE VON KUNSTSTOFFROHREN**
METHOD FOR MEASURING THE WALL THICKNESS OF PLASTIC TUBES
METHODE DE MESURE DE L'EPAISSEUR DE PAROI DE TUBES EN PLASTIQUE

(30) Priorität: 24.10.1997 DE 19746965
(43) Veröffentlichungstag der Anmeldung: 09.08.2000
(73) Patentinhaber: INOEX GmbH, 32547 Bad Oeynhausen (DE)
(72) Erfinder: SCHULZE, Torsten, D-32549 Bad Oeynhausen (DE)
(74) Vertreter: Knauf, Rudolf, Dipl.-Ing.
(86) Internationale Anmeldenummer: EP9806509
(87) Internationale Veröffentlichungsnummer: WO9922200

(56) Entgegenhaltungen:
- EP-A- 0 395 499
- EP-A- 0 592 974
- DE-A- 3 511 563
- US-A- 4 481 820

## Beschreibung

Die Erfindung betrifft ein Meßverfahren für die Dicke von Körpern, insbesondere die Wanddicke von extrudierten Körpern, wie Rohren, aus Kunststoff nach dem Ultraschallechoprinzip, bei dem aus der gemessenen Laufzeit des Ultraschallsignals im Körper unter Berücksichtigung der materialabhängigen Ausbreitungsgeschwindigkeit des Ultraschallsignals im Körper die Wanddicke des Körpers ermittelt wird, wobei parallel zur Messung der Laufzeit des Ultraschallsignals im Körper die temperaturabhängige Dämpfung des Ultraschallsignals im Körper gemessen und mit diesem Meßwert die Laufzeit im Sinne einer Temperaturkompensation korrigiert wird (siehe dazu EP-A-0 592 974).

Meßverfahren dieser und ähnlicher Art sind bei der Wanddickenmessung von extrudierten Kunststoffrohren bekannt. Vorzugsweise werden solche Meßverfahren eingesetzt, um die Wanddicke des extrudierten Körpers unmittelbar nach der Herstellung kontinuierlich zu erfassen. In Abhängigkeit von dem Meßergebnis kann steuernd in den Produktionsprozeß eingegriffen werden.

Die Wanddickenmessung nach dem Ultraschallechoprinzip setzt voraus, daß die Ausbreitungsgeschwindigkeit des Ultraschallsignals im zu messenden Körper bekannt ist. Diese Ausbreitungsgeschwindigkeit ist nicht nur abhängig vom in der Regel bekannten Material des Körpers, sondern auch von dessen Temperatur. Da bei der Extrusion die Temperatur des Körpers schwanken kann, sind die Meßergebnisse für die Dicke des Körpers fehlerbehaftet, wenn der Einfluß der Temperatur berücksichtigt wird.

Bei einem bekannten Meßverfahren der eingangs genannten Art (US-Z: Ultrasonics, Vol. 30, No. 6, 1992, Seite 347 bis 350) wird ein Korrekturfaktor für die Berücksichtigung des Einflusses der Temperatur auf die Laufzeit aus einem Vergleich der Amplituden entsprechender Signale von aufeinanderfolgenden Echoimpulsen ermittelt. Diese Art der Berücksichtigung des Temperatureinflusses macht eine verhältnismäßig aufwendige Auswerteeinheit erforderlich.

Der Erfindung liegt die Aufgabe zugrunde, ein Meßverfahren zu entwickeln, bei dem der temperaturabhängige Einfluß auf das Meßergebnis für die Dicke des Körpers auf möglichst einfache Art und Weise berücksichtigt wird.

Diese Aufgabe wird erfindungsgemäß dadurch gelöst, daß die Dämpfung des Ultraschallsignals im Körper aus dem Vergleich der Bandmittenfrequenzen eines in den Körper eingeleiteten breitbandigen Ultraschallsignals und des nach Durchlaufen des Körpers aus ihm austretenden reflektierten Ultraschallsignals ermittelt wird.

Die Berücksichtigung des Temperatureinflusses des Materials auf die Laufzeit kann noch dadurch verfeinert werden, daß, wie an sich bekannt, zusätzlich aus dem Vergleich der Amplituden des in den Körper eingeleiteten und des nach Durchlaufen des Körpers aus ihm austretenden Ultraschallsignals ein Korrekturfaktor ermittelt wird.

Bei dem erfindungsgemäßen Meßverfahren werden von Temperatureinflüssen unabhängige Meßwerte für die Wanddicke geliefert. Temperaturschwankungen werden kompensiert. Nachkalibrierungen bei sich ändernden Temperaturen können also entfallen.

Im folgenden wird die Erfindung anhand einer Zeichnung näher erläutert.

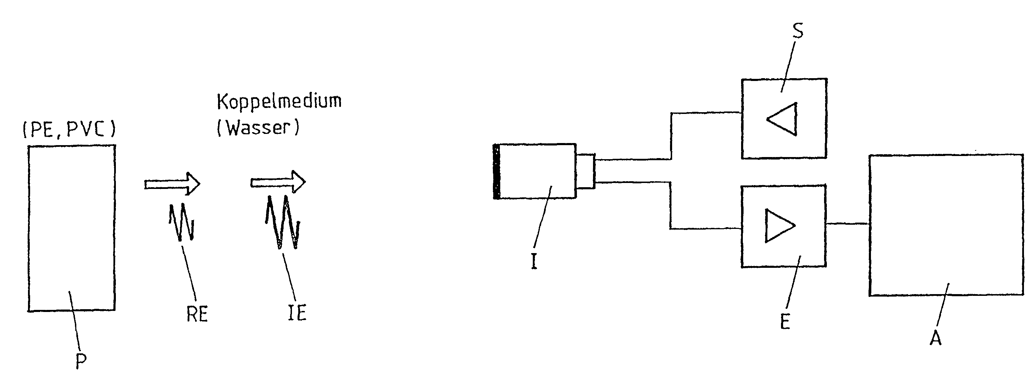

Die in der Zeichnung dargestellte Meßanordnung dient zur Ermittlung der Dicke eines Körpers P aus PE oder PVC. Dieser Körper P könnte ein Ausschnitt eines gerade aus einem Extruder kommenden extrudierten Rohres sein. Dieser Körper P wird mit einem Ultraschallsignal beaufschlagt. Dazu ist ein Sender S vorgesehen, der über einen Sensor I und ein Koppelmedium, zum Beispiel Wasser, ein Ultraschallsignal an den Körper P gibt. Das Ultraschallsignal wird beim Auftreffen auf die Oberfläche des Körpers P reflektiert. Dieses reflektierte Signal IE wird als Eintrittsecho bezeichnet. Ein Teil des ausgesendeten Ultraschallsignals gelangt in den Körper P und wird an dessen Rückwand reflektiert, um dann vorderseitig wieder auszutreten. Dieses reflektierte und austretende Signal RE wird als Rückwandecho bezeichnet. Das Eintrittsecho IE und das Rückwandecho RE werden vom Sensor I aufgenommen und an einen Empfänger E weitergeleitet, von dem die Signale zu einer Signalaufbereitung A gelangen.

Bei der Ausbreitung der Signale, also des Eintrittsechos IE und des Rückwandechos RE, wird zunächst der Laufzeitunterschied der gestaffelt empfangenen Signale festgestellt und daraus die Laufzeit des Ultraschallsignals im Körper P ermittelt. Aus dieser Laufzeit kann dann unter Berücksichtigung der materialabhängigen Fortpflanzungsgeschwindigkeit im Körper P die Dicke des Körpers P ermittelt werden.

Eine solche Meßeinrichtung und ein solches Meßverfahren für die Wanddicke eines Körpers sind Stand der Technik. Zum Stand der Technik gehört auch, daß die Auswerteeinheit A auf die materialspezifischen Eigenschaften des Körpers P kalibriert ist.

Der Einfluß der Temperatur des Körpers P auf die Laufzeitmessung läßt sich bei der Erfindung dadurch berücksichtigen, daß parallel zur Laufzeitmessung des Ultraschallsignals im Körper P auch die Dämpfung des Ultraschallsignals im Körper P ermittelt wird. Dies geschieht dadurch, daß die Bandmittenfrequenzen des Eintrittsechos IE und des Rückwandechos RE eines breitbandigen Ultraschallsignals miteinander verglichen werden. Aus diesem Vergleich wird dann ein Korrekturfaktur zur Temperaturkompensation der Ausbreitungsgeschwindigkeit des Ultraschallsignals ermittelt. Da einerseits die funktionellen Zusammenhänge zwischen der Dämpfung von Ultraschallsignalen der verschiedenen Frequenzen und der Temperatur und andererseits zwischen der Temperatur und der Ausbreitungsgeschwindigkeit eines Ultraschallsignals in einem bestimmten Material bekannt sind, kann die Auswerteeinheit A über den Meßwert für die Frequenzverschiebung der Bandmittenfrequenz den Faktor ermitteln, mit dem der aus der Laufzeitmessung ermittelte Wert für die Dicke des Körpers zu korrigieren ist, um zu einem eindeutigen Meßergebnis für die Dicke des Körpers P auch bei schwankenden Temperaturen zu kommen.

Um diese Temperaturkompensation bei der Wanddickenmessung weiter zu verfeinern, kann zusätzlich auch ein Vergleich der Amplituden des Eintrittsechos und des Rückwandechos erfolgen.

## Patentansprüche

1. Meßverfahren für die Dicke von Körpern, insbesondere die Wanddicke von extrudierten Körpern, wie Rohren, aus Kunststoff nach dem Ultraschallechoprinzip, bei dem aus der gemessenen Laufzeit des Ultraschallsignals im Körper unter Berücksichtigung der materialabhängigen Ausbreitungsgeschwindigkeit des Ultraschallsignals im Körper die Wanddicke des Körpers ermittelt wird, wobei parallel zur Messung der Laufzeit des Ultraschallsignals im Körper die temperaturabhängige Dämpfung des Ultraschallsignals im Körper gemessen und mit diesem Meßwert die Laufzeit im Sinne einer Temperaturkompensation korrigiert wird,
**dadurch gekennzeichnet, daß** die Dämpfung des Ultraschallsignals im Körper aus dem Vergleich der Bandmittenfrequenzen eines in den Körper eingeleiteten breitbandigen Ultraschallsignals und des nach Durchlaufen des Körpers aus ihm austretenden reflektierten Ultraschallsignals ermittelt wird.

2. Meßverfahren nach Anspruch 1,
**dadurch gekennzeichnet, daß** die Dämpfung des Ultraschallsignals im Körper zusätzlich aus dem Vergleich der Amplituden des in den Körper eingeleiteten und des nach Durchlaufen des Körpers aus ihm austretenden Ultraschallsignals ermittelt wird.

## Claims

1. A method for measuring the thickness of bodies, in particular, the wall thickness of extruded plastic bodies, e.g., pipes, in accordance with the ultrasonic echo principle, wherein the wall thickness of the body is determined from the measured transit time of the ultrasonic signal in the body, namely by taking into account the material-dependent propagation speed of the ultrasonic signal in the body, wherein the temperature-dependent attenuation of the ultrasonic signal in the body is measured parallel to the measurement of the transit time of the ultrasonic signal, and wherein the transit time is corrected with this measured value in the sense of a temperature compensation,
**characterized by** the fact that the attenuation of the ultrasonic signal in the body is determined by comparing the midband frequency of a broadband ultrasonic signal introduced into the body with the midband frequency of the reflected ultrasonic signal that emerges from the body after having passed through the body.

2. The measuring method according to Claim 1,
**characterized by** the fact that the attenuation of the ultrasonic signal in the body is simultaneously determined by comparing the amplitude of the ultrasonic signal introduced into the body with the amplitude of the ultrasonic signal that emerges from the body after having passed through the body.

## Revendications

1. Procédé de mesure de l'épaisseur de corps, notamment l'épaisseur de paroi de corps extrudés, tels que des tuyaux, en matière plastique selon le principe d'échos d'ultrasons, dans lequel l'épaisseur de paroi du corps est déterminée à partir du temps de propagation mesuré du signal d'ultrasons dans le corps, en tenant compte de la vitesse de propagation spécifique au matériau du signal d'ultrasons dans le corps, l'amortissement du signal d'ultrasons dans le corps, dépendant de la température, étant mesuré parallèlement à la mesure du temps de propagation du signal d'ultrasons dans le corps, et le temps de propagation étant corrigé avec cette valeur de mesure dans le sens d'une compensation de température,
**caractérisé en ce que** l'amortissement du signal d'ultrasons dans le corps est déterminé par la comparaison des fréquences de milieu de bande d'un signal d'ultrasons à large bande introduit dans le corps et du signal d'ultrasons réfléchi et sortant du corps après la traversée de celui-ci.

2. Procédé de mesure selon la revendication 1,
**caractérisé en ce que** l'amortissement du signal d'ultrasons dans le corps est déterminé en outre par une comparaison des amplitudes des signaux d'ultrasons introduit dans le corps et sortant de celui-ci après la traversée du corps.
